# EUROPEAN PATENT SPECIFICATION

(11) **EP 4 322 621 B1**
(45) Date of publication and mention of the grant of the patent: **16.10.2024**
(21) Application number: 22189810.9
(22) Date of filing: 10.08.2022
(51) Int. Cl.: H04W 48/18, H04W 48/20

(54) **METHOD FOR OPERATING A USER EQUIPMENT BEING IN A RADIO ENVIRONMENT COMPRISING A PLURALITY OF RADIO CELLS OF A PLURALITY OF MOBILE COMMUNICATION NETWORKS, USER EQUIPMENT, SYSTEM OR MOBILE COMMUNICATION NETWORK, PROGRAM AND COMPUTER-READABLE MEDIUM**
VERFAHREN ZUM BETRIEB EINES BENUTZERGERÄTS IN EINER FUNKUMGEBUNG MIT EINER VIELZAHL VON FUNKZELLEN EINER VIELZAHL VON MOBILKOMMUNIKATIONSNETZEN, BENUTZERGERÄT, SYSTEM ODER MOBILKOMMUNIKATIONSNETZ, PROGRAMM UND COMPUTERLESBARES MEDIUM
PROCÉDÉ DE FONCTIONNEMENT D'UN ÉQUIPEMENT UTILISATEUR SE TROUVANT DANS UN ENVIRONNEMENT RADIO COMPRENANT UNE PLURALITÉ DE CELLULES RADIO D'UNE PLURALITÉ DE RÉSEAUX DE COMMUNICATION MOBILES, ÉQUIPEMENT UTILISATEUR, SYSTÈME OU RÉSEAU DE COMMUNICATION MOBILE, PROGRAMME ET SUPPORT LISIBLE PAR ORDINATEUR

(43) Date of publication of application: 14.02.2024
(73) Proprietor: Deutsche Telekom AG, 53113 Bonn (DE)
(72) Inventor: NEUBACHER, Andreas, 2100 Korneuburg (AT); BISCHINGER, Kurt, 1120 Wien (AT); LAUSTER, Reinhard, 3100 St. Pölten (AT)
(74) Representative: Schwöbel, Thilo K.

(56) References cited:
- WO-A1-2022/115733
- KURT BISCHINGER | DEUTSCHE TELEKOM: "S1-210038r1 (revision of S1-21xxxx)", vol. SA WG1, no. Electronic Meeting; 20210222 - 20210304, 15 March 2021 (2021-03-15), XP051986671, Retrieved from the Internet <URL:https://ftp.3gpp.org/tsg_sa/WG1_Serv/TSGS1_93e_Electronic_Meeting/Docs_revised_number/S1-210038r1.zip S1-210038_SENSEr1.pdf> [retrieved on 20210315]
- "Minutes of 3GPP TSG SA WG1 Meeting #95e", vol. SA WG1, no. Electronic Meeting; 20211108 - 20211118, 24 February 2022 (2022-02-24), XP052116455, Retrieved from the Internet <URL:https://ftp.3gpp.org/tsg_sa/WG1_Serv/TSGS1_95e_EM_August2021/report/S1-214005.zip S1-214005.docx> [retrieved on 20220224]
- REINHARD LAUSTER ET AL: "CT aspects of Signal level Enhanced Network SElection", vol. 3GPP CT 1, no. Online; 20220818 - 20220826, 25 August 2022 (2022-08-25), XP052206051, Retrieved from the Internet <URL:https://www.3gpp.org/ftp/tsg_ct/WG1_mm-cc-sm_ex-CN1/TSGC1_137e/Docs/C1-225161.zip C1-225161_was224549_WID_CT_on_SENSE_v6.docx> [retrieved on 20220825]

## Description

### BACKGROUND

The present invention relates to a method for operating a user equipment being in a radio environment comprising a plurality of radio cells of a plurality of mobile communication networks, the user equipment measuring or detecting reception conditions regarding the plurality of radio cells, and subsequently selects and/or registers to a mobile communication network out of the plurality of mobile communication networks, wherein the user equipment has or is associated with a home public land mobile network, HPLMN, and the user equipment comprises a terminal equipment entity or functionality as well as a mobile termination entity or functionality.

Furthermore, the present invention relates to a user equipment for being operated in a radio environment comprising a plurality of radio cells of a plurality of mobile communication networks, the user equipment being configured to measure or to detect reception conditions regarding the plurality of radio cells, and being configured to subsequently select and/or register to a mobile communication network out of the plurality of mobile communication networks, wherein the user equipment has or is associated with a home public land mobile network, HPLMN, and the user equipment comprises a terminal equipment entity or functionality as well as a mobile termination entity or functionality.

Additionally, the present invention relates to a system or a mobile communication network for operating a user equipment in a radio environment comprising a plurality of radio cells of a plurality of mobile communication networks, each one of these radio cells being associated, respectively, to at least one mobile communication network of the plurality of mobile communication networks, the user equipment being configured to measure or to detect reception conditions regarding the plurality of radio cells, and being configured to subsequently select and/or register to a mobile communication network out of the plurality of mobile communication networks, wherein a home public land mobile network, HPLMN, is associated with the user equipment, and the user equipment comprising a terminal equipment entity or functionality as well as a mobile termination entity or functionality, wherein, regarding cell selection and/or network selection by the user equipment, an enhanced selection criterion, provided by the HPLMN, is stored in the user equipment.

Furthermore, the present invention relates to a program and to a computer-readable medium for operating a user equipment being in a radio environment comprising a plurality of radio cells of a plurality of mobile communication networks according to the inventive method.

In currently deployed mobile communication networks, a user equipment or mobile station typically experiences a radio environment (i.e. the different radio frequency signals that the user equipment - at its current position or location - is potentially able to receive on different frequencies and/or frequency bands and/or at different points in time or time intervals or time slots) comprising a plurality of radio cells that are at least detectable and/or receivable by the respective user equipment or mobile station. One such radio cell is typically provided by a base station entity, i.e. an antenna arrangement of a specific base station entity emits radio frequency signals such that the user equipment, at its current position or location, is able to receive such radio frequency signals with a sufficient quality, typically with a sufficient signal to noise ratio. If this is the case, the radio environment of the user equipment comprises the considered radio cell. A plurality of radio cells (i.e. of base station entities) are typically part of a mobile communication network being a cellular mobile communication network. Hence, the plurality of radio cells of the radio environment of the user equipment are typically part of a plurality of mobile communication networks, typically each one of these radio cells being associated, respectively, to either one mobile communication network of the plurality of mobile communication networks or to more than one mobile communication networks of the plurality of mobile communication networks. Hence, by means of selecting a radio cell (out of the plurality of radio cells present or receivable of the radio environment at the considered position or location of the user equipment), the user equipment also selects a mobile communication network (that is associated to that radio cell). However, before a mobile communication network is considered as a network selection candidate (i.e. a candidate mobile communication network) at all, the user equipment needs to find a suitable radio cell of a mobile communication network or public land mobile network to camp on. The criteria for a radio cell to be considered as suitable radio cell (to camp on), is dependent on the considered network technology (or radio access technology) being defined in or by means of the relevant standardization documents, mostly referred to 3GPP (third generation partnership project) documents.

In presently known mobile communication networks, i.e. in networks in compliance with the currently defined standards or standard documents, a number of drawbacks might occur: In bad or unfavorable radio coverage conditions (of a user equipment), the 3GPP defined order or prioritization of how mobile communication networks are being selected to obtain communication services or any service is not suitable in all relevant situations. For example, in some situations the field strength and/or quality (of the radio signal or a plurality of radio signals) of a radio cell (of the user equipment's radio environment) is not considered in the network selection process (PLMN selection process), leading to user equipments not being able to receive and/or transmit data subsequent to the initial network selection process (PLMN selection process). Such situations include cases where some user equipments may fail obtaining data services, even though the selected public land mobile network fulfilled the cell selection criteria for considering the respective mobile communication network (public land mobile network) in the network selection (or PLMN selection) process. In particular, in case that a user equipment is in or at an unfavorable position, the applicable cell selection criteria (e.g. "RX Access Lev min" criteria in GSM or the S-criterion in GSM succeeding technologies) might be barely fulfilled, conducting the user equipment to consider the respective public land mobile network for PLMN selection, but in fact due to, e.g., fading or local interference at the location of the user equipment, data transport between the network and the user equipment may fail subsequently. Such cases occur, especially regarding cellular user equipments or devices for internet-of-things or M2M (Machine to Machine) communications services, which devices are often used in a stationary manner (e.g. meters or all kinds of sensors or the like) and in case of unfavorable radio (reception) conditions, this kind of problem is likely to subsist permanently for such user equipment, leading to the situation of such a user equipment (especially if in automatic network selection mode) being stuck on a PLMN, while not being able to transmit data.

It has thus been proposed, in presently known mobile communication networks, to either apply an offset to the minimum required field strength to allow network access, or, in case of 3GPP technologies like UMTS, LTE or 5G, to apply an offset or an absolute value (threshold) in the S-criterion or in the network selection phase to mitigate the problem. However, in such a situation the application-level control entity or functionality of the user equipment is not aware whether or not such mechanism is actually applied and/or whether an offset or an absolute value (threshold) is used and/or which exact value thereof is used. The 3GPP technical contribution titled "Signal level Enhanced Network Selection (SENSE)", S1-210038r1, discloses a Signal level Enhanced Network Selection (SENSE) method, proposing a change to the traditional network selection process, especially for loT/MTC/M2M devices , usually stationary, so that an operatorconfigurable signal level threshold is taken into account already in the RPLMN or (E)HPLMN selection and in subsequent steps.

### SUMMARY

An object of the present invention is to provide a technically simple, effective and cost effective solution for operating a user equipment being in a radio environment comprising a plurality of radio cells of a plurality of mobile communication networks. The invention is defined by the appended claims.

It is thereby advantageously possible according to the present invention that it is not only possible to flexibly apply the HPLMN-provided enhanced selection criterion (instead of applying the conventionally used process) but also to ensure that the application-level entity or functionality of the user equipment, especially of or within the terminal equipment entity or functionality, is aware of the HPLMN-provided enhanced selection criterion and/or its application or use and/or its parameter value. Hence, it is advantageously possible, according to the present invention, to perform the network and/or cell selection in an optimized manner, especially leading to avoid problems related to the use of the conventionally used network selection process such as the ones mentioned above. Especially, a command towards the mobile termination entity or functionality is able to be generated, based on the terminal equipment entity or functionality's knowledge of the selection parameter information, e.g. by settings of the user equipment application, i.e. of the terminal equipment entity or functionality, such as events, especially periodical events or the like; afterwards, the result of such commands are able to be reported to the network or a backend application server (e.g. via application layer and/or non-access stratum, NAS, communication). Additionally, the home network (or HPLMN) or a backend application server can send a command (e.g. via application layer and/or non-access stratum communication) to the user equipment to trigger the user equipment application (as part of or within the terminal equipment entity or functionality) to retrieve the thresholds. This information can be beneficially used, in case the application (either within the terminal equipment entity or functionality or triggered by the backend application server) may manually select another network and/or radio access technology type, RAT type (e.g. a network or radio access technology which has not been selected in case the thresholds or offsets have been applied during the automatic selection); an application may want to do such a manual selection in case the automatic selection applying the threshold leads to undesired results. Furthermore, with the knowledge (by the application of the terminal equipment entity or functionality) about whether and which offsets or thresholds have been set by the home operator (regarding the enhanced selection criterion), it is advantageously possible according to the present invention relieve troubleshooting: According to the present invention, an application executed on the user equipment, may query this (enhanced selection criterion) value(s) and report it/them towards the backend application server (e.g., running on a server in the cloud) or directly to the home operator network; hence, in case the device becomes not responsive or unavailable or suffers from coverage and connectivity problems the customer is able to contact the operator, to adjust the thresholds or offsets in order to resolve the connectivity problems.

Conventionally, cell selection criteria are used for radio cells to be considered suitable radio cells (i.e. for a user equipment to camp on), and these cell selection criteria are typically dependent on the considered network technology (or radio access technology) used, i.e. the radio access technology that both the user equipment and the radio cell are using. Typically, different generations of mobile communication systems (i.e. different radio access technologies) are considered, most often including one, all or a subset of the following: 2G, 3G, 4G and 5G technology (i.e. second generation mobile communication systems (GSM, global system for mobile communications), third generation mobile communication systems (UMTS, Universal Mobile Telecommunications System including its radio technology UTRA, UMTS Terrestrial Radio Access), fourth generation mobile communication systems (LTE, long term evolution including its radio technology E-UTRA, evolved UMTS Terrestrial Radio Access), and fifth generation mobile communication systems (5GS, 5G system including its radio technology NR, New Radio)), but further or additional or alternative radio access technologies are not excluded according to the present invention.

Once the user equipment (or, more specifically, the so-called AS, Access Stratum part of the user equipment) has read one or several PLMNs, i.e. one or several radio cells, which may belong to different mobile communication networks or public land mobile networks, the radio cells or public land mobile networks that passed the cell selection criterion (to be, respectively, applied in view of the potentially different radio access technologies) are reported to the so-called NAS, Non Access Stratum, (or NAS part of the user equipment) for the subsequent stage (or step) of network selection. Typically, this reporting includes also the information of the respective field strength values (measured by the user equipment) such as, e.g., the RSRP (Reference Signals Received Power) value. Based on the reporting (especially by the AS part of the user equipment to the NAS part of the user equipment), the actual network selection is able to take place. Conventionally, at the network selection stage, all radio cells judged (in the preceding cell selection stage) to be suitable radio cells are taken into consideration.

According to the present invention, the user equipment has or is associated with a home public land mobile network, HPLMN, and the user equipment comprises a terminal equipment entity or functionality (where typically the application-level entity or functionality is running or is located) as well as a mobile termination entity or functionality. Regarding cell selection and/or network selection by the user equipment, an enhanced selection criterion, provided by the HPLMN, is stored in the user equipment (or is, at least, able to be stored in the user equipment).

According to the present invention, regarding cell selection by the user equipment, a radio cell of a considered radio access technology is considered to be a suitable radio cell only in case that the corresponding reception conditions, as measured by the user equipment, correspond to or exceed the HPLMN-provided enhanced selection criterion regarding the considered radio access technology (or, at least, cell selection as performed by the user equipment is able to performed such that - in case that the HPLMN-provided enhanced selection criterion is provided (transmitted) to the user equipment and stored therein - a radio cell of a considered radio access technology is considered to be a suitable radio cell only in case that the corresponding reception conditions, as measured by the user equipment, correspond to or exceed the HPLMN-provided enhanced selection criterion regarding the considered radio access technology). Alternatively or cumulatively according to the present invention, regarding network selection by the user equipment, only such mobile communication networks corresponding to suitable radio cells of the considered radio access technology are considered for network selection of the user equipment that have or correspond to reception conditions corresponding to or exceeding the enhanced selection criterion (or, at least, network selection as performed by the user equipment is able to performed such that - in case that the HPLMN-provided enhanced selection criterion is provided (transmitted) to the user equipment and stored therein - only such mobile communication networks corresponding to suitable radio cells of the considered radio access technology are considered for network selection of the user equipment that have or correspond to reception conditions corresponding to or exceeding the enhanced selection criterion). It is proposed according to the present invention that the inventive method comprises that, in a first step, the terminal equipment entity or functionality requests a selection parameter information, the selection parameter information relating to or indicating whether the HPLMN-provided enhanced selection criterion is used or applied by the mobile termination entity or functionality and/or relating to or indicating a parameter value of the HPLMN-provided enhanced selection criterion, and that, in a second step, the terminal equipment entity or functionality receives the selection parameter information. Hence, this means that, according to the present invention, it is advantageously possible to allow an application (or an application-level entity or functionality of the terminal equipment entity or functionality) to become aware, whether an offset or threshold (i.e. a HPLMN-provided enhanced selection criterion) is set, and what the actual value of that threshold is.

According to the present invention, it is advantageously possible and preferred that the user equipment comprises, besides the terminal equipment entity or functionality and the mobile termination entity or functionality, a terminal adaptor entity or functionality, wherein the terminal adaptor entity or functionality receives, during or after the first step, the request of the selection information from the terminal equipment entity or functionality, and wherein the terminal adaptor entity or functionality transmits, during or prior to the second step, the selection information to the terminal equipment entity or functionality,
wherein especially the user equipment is a machine type communication device.

It is thereby advantageously possible according to the present invention to comparatively easily implement and realize the present invention, and to provide for a comparatively large applicability, as user equipments are often having, besides both the terminal equipment entity or functionality and the mobile termination entity or functionality, also a terminal adaptor entity or functionality.

According to the present invention, it is advantageously furthermore possible and preferred that the terminal adaptor entity or functionality, transmits, during or after the first step, a further request of the selection parameter information to the mobile termination entity or functionality, and wherein the terminal adaptor entity or functionality receives, during or prior to the second step, the selection information from the mobile termination entity or functionality.

It is thereby advantageously possible according to the present invention to comparatively easily implement and realize the present invention.

According to the present invention, it is advantageously furthermore possible and preferred that an AT-command interface is used between, on the one hand, the terminal equipment entity or functionality, and, on the other hand, the terminal adaptor entity or functionality or the mobile termination entity or functionality.

It is thereby advantageously possible according to the present invention to comparatively easily implement and realize the present invention by means of using the AT command interface to allow an application (or an application-level entity or functionality of the terminal equipment entity or functionality) to become aware, whether an offset or threshold (i.e. a HPLMN-provided enhanced selection criterion) is set, and what the actual value of that threshold is.

Thereby, it is advantageously possible, according to the present invention, that the application or application program of the terminal equipment entity or functionality is able to take into consideration, and especially flexibly react on, settings or configurations provided by the HPLMN and/or that the application or application program of the terminal equipment entity or functionality is able to establish, or close, a feedback loop towards either the HPLMN or a backend application server in order to be able to possible adapt settings and/or values of or regarding the HPLMN-provided enhanced selection criterion.

Furthermore, it is advantageously possible and preferred according to the present invention that the HPLMN-provided enhanced selection criterion comprises or takes into account a home-operator-controlled value being set or being able to be adjusted by the HPLMN or its operator, wherein the HPLMN-provided enhanced selection criterion is especially more restrictive compared to a cell selection criterion lacking a home-operator-controlled component, wherein especially the HPLMN-provided enhanced selection criterion is also applied during the normal cell-selection procedure once the network selection has taken place and/or wherein especially the HPLMN-provided enhanced selection criterion triggers the network selection in case the corresponding reception conditions, as measured by the user equipment do not correspond to or do not exceed the HPLMN-provided enhanced selection criterion.

It is thereby advantageously possible according to the present invention that the home operator is able to influence the network selection process of the user equipment such that it is possible to comparatively easily implement and realize the present invention.

Furthermore, it is advantageously possible and preferred according to the present invention that the HPLMN-provided enhanced selection criterion and/or the home-operator-controlled value of the HPLMN-provided enhanced selection criterion corresponds to at least one out of the following:
-- an absolute value or,
-- a relative value compared to the cell selection criterion lacking a home-operator-controlled component,
-- an offset value being additionally applied compared to the cell selection criterion lacking a home-operator-controlled component

It is thereby advantageously possible according to the present invention to comparatively easily implement and realize the present invention.

Furthermore, it is advantageously possible and preferred according to the present invention that the home-operator-controlled value of the HPLMN-provided enhanced selection criterion is
-- stored in the user equipment, especially within or as part of the universal integrated circuit card and/or the subscriber identity module, and/or
-- provided or transmitted to the user equipment, especially by the HPLMN or its operator, especially by means of using an over-the-air transmission method, and/or
-- provided or transmitted via NAS signaling to the user equipment by the HPLMN.

It is thereby advantageously possible according to the present invention to comparatively easily implement and realize the present invention.

These and other characteristics, features and advantages of the present invention will become apparent from the following detailed description, taken in conjunction with the accompanying drawings, which illustrate, by way of example, the principles of the invention. The description is given for the sake of example only, without limiting the scope of the invention. The reference figures quoted below refer to the attached drawings.

### BRIEF DESCRIPTION OF THE DRAWINGS

Figure 1 schematically illustrates a user equipment in a radio environment comprising a plurality of radio cells of a plurality of mobile communication networks.
Figure 2 schematically illustrates a user equipment and its components in greater detail.
Figure 3 schematically illustrates a situation of the user equipment measuring different signal strength of the different radio cells.
Figure 4 schematically illustrates an example of a communication between different parts within a user equipment in case of using an universal integrated circuit card as part of the user equipment.

### DETAILED DESCRIPTION

The present invention will be described with respect to particular embodiments and with reference to certain drawings, but the invention is not limited thereto but only by the claims. The drawings described are only schematic and are nonlimiting. In the drawings, the size of some of the elements may be exaggerated and not drawn on scale for illustrative purposes.

Where an indefinite or definite article is used when referring to a singular noun, e.g. "a", "an", "the", this includes a plural of that noun unless something else is specifically stated.

Furthermore, the terms first, second, third and the like in the description and in the claims are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

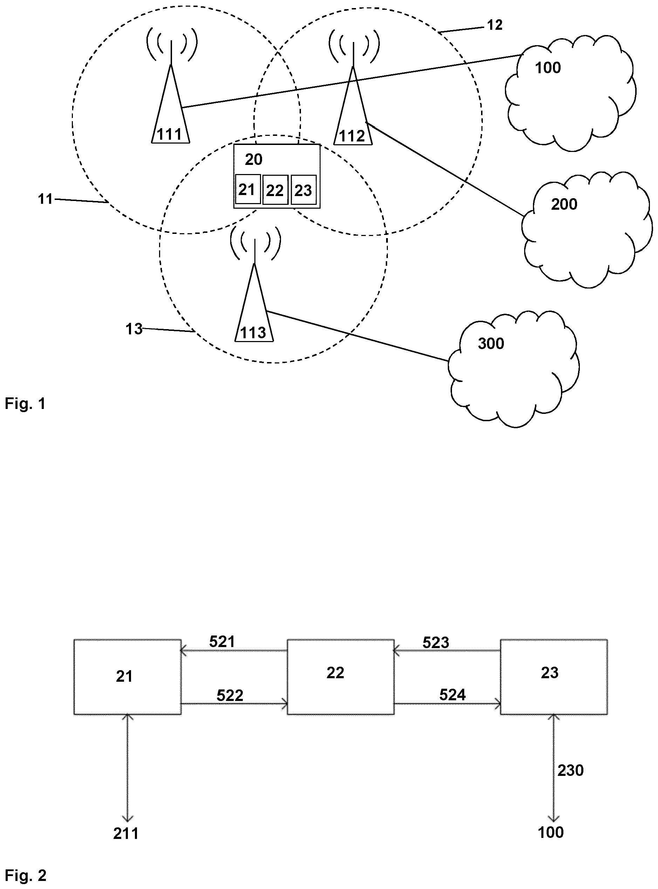

In Figure 1, a user equipment 20 is schematically shown in a radio environment comprising a plurality of radio cells of a plurality of mobile communication networks. In the exemplary representation of Figure 1, a first radio cell 11 is associated with or related to a first mobile communication network 100, a second radio cell 12 is associated with or related to a second mobile communication network 200, and a third radio cell 13 is associated with or related to a third mobile communication network 300.

Schematically, a base station entity is represented regarding each one of the three radio cells 11, 12, 13 that the user equipment 20 detects or "sees": A first base station entity 111 (typically but not necessarily of the first mobile communication network 100) generates or provides radio coverage of or regarding the first radio cell 11, a second base station entity 112 (typically but not necessarily of the second mobile communication network 200) generates or provides radio coverage of or regarding the second radio cell 12, and a third base station entity 113 (typically but not necessarily of the third mobile communication network 200) generates or provides radio coverage of or regarding the third radio cell 13.

In Figure 1, the user equipment 20 is shown being located within the radio coverage area (illustrated by means of dashed circles) of the first radio cell 11, the second radio cell 12, as well as the third radio cell 13. The user equipment 20 measures or detects reception conditions regarding the plurality of radio cells 11, 12, 13, and subsequently selects and/or registers to a mobile communication network out of the plurality of mobile communication networks 100, 200, 300.

Figure 2 shows the user equipment 20 and its components in greater detail: According to the present invention, the user equipment 20 comprises a terminal equipment entity or functionality 21 as well as a mobile termination entity or functionality 23. In the exemplary embodiment shown in Figure 2, the user equipment 20 additionally comprises a terminal adaptor entity or functionality 22.

More generally according to the present invention, the terminal equipment entity or functionality 21 requests, in the first step of the inventive method, a selection parameter information 521, the selection parameter information 521 relating to or indicating whether the HPLMN-provided enhanced selection criterion 520 is used or applied by the mobile termination entity or functionality 23 and/or relating to or indicating a parameter value of the HPLMN-provided enhanced selection criterion 520, and the terminal equipment entity or functionality 21 then receives, in the second step of the inventive method, the selection parameter information 521.

In the exemplary embodiment shown in Figure 2, the terminal adaptor entity or functionality 22 receives, during or after the first step, the request 522 of (or regarding) the selection information from the terminal equipment entity or functionality 21 (especially triggered by a user interaction and/or an event of the application 211 of the terminal equipment entity or functionality 21), and the terminal adaptor entity or functionality 22 transmits, during or prior to the second step, the selection parameter information 521 to the terminal equipment entity or functionality 21.

Furthermore in the exemplary embodiment shown in Figure 2, the terminal adaptor entity or functionality 22, transmits, during or after the first step, a further request 524 of the selection parameter information 521 to the mobile termination entity or functionality 23, and the terminal adaptor entity or functionality 22 receives, during or prior to the second step, the selection parameter information 521 from the mobile termination entity or functionality 23, especially as part of a message 523. Between the mobile termination entity or functionality 23 (of the user equipment 20) and the network 100 (exemplarily, in Figure 2, the first mobile communication network 100 is considered to be the HPLMN of the user equipment 20; however, it would also have been possible that the second or third networks 200, 300 play this role), a number of network messages 230 are typically exchanged.

According to an exemplary embodiment of the present invention, the request 522 (or request message 522) corresponds to AT commands; the selection parameter information 521 corresponds to the respective responses; the further request 524 (or further request message 524) corresponds to mobile termination control commands (typically according to a proprietary interface of the manufacturer of the terminal adaptor entity or functionality 22 and/or of the mobile termination entity or functionality 23); the message 523 (conveying or comprising the selection parameter information 521) corresponds to a mobile termination status message.

An AT-command interface (or, more generally, a terminal equipment-terminal adaptor interface) is used between, on the one hand, the terminal equipment entity or functionality 21, and, on the other hand, the terminal adaptor entity or functionality 22 or the mobile termination entity or functionality 23, thereby allowing an application (or an application-level entity or functionality of the terminal equipment entity or functionality 21) to become aware, whether an offset or threshold (i.e. a HPLMN-provided enhanced selection criterion) is set, and what the actual value of that threshold is.

Especially when an AT-command interface is used, a command towards the mobile termination entity or functionality is comparatively easily able to be generated, based on the terminal equipment entity or functionality's knowledge of the selection parameter information, e.g. by settings of the user equipment application. Thereafter, the result of such commands are able to be reported to the network or a backend application server. Additionally, the home network (or HPLMN) or a backend application server can send a command (e.g. via application layer and/or non-access stratum communication) to the user equipment to trigger the user equipment application to retrieve the thresholds using AT-commands. This information can be beneficially used, in case the application manually selects another network and/or radio access technology type.

According to the present invention the AT-command interface is realized either between the terminal equipment entity or functionality 21 and the terminal adaptor entity or functionality 22, or between the terminal equipment entity or functionality 21 and the mobile termination entity or functionality 23.

Especially, the AT-command interface is used by the application or application program of the terminal equipment entity or functionality 21, and especially in order to execute settings of the application, especially events such as periodical events, or in order to execute a command of the HPLMN or of a backend application server; especially, the application or application program of the terminal equipment entity or functionality 21 thereafter reports the result to the HPLMN or to a backend application server, especially via application layer and/or non-access stratum communication, NAS.

According to an especially preferred embodiment of the present invention, the user equipment 20 is a machine type communication device.

Furthermore, it is preferred according to the present invention that the terminal adaptor entity or functionality 22 corresponds, e.g., to a GSM data card, e.g. equal to a DCE, data circuit terminating equipment, and the terminal equipment entity or functionality 21, e.g. corresponds to a computer (equal to a DTE, data terminal equipment) or, in case of an internet-of-things device (or machine type communication device), it would be the actual application executed in the device.

Furthermore, the user equipment 20 comprises a universal integrated circuit card and/or a subscriber identity module, especially comprising a secure element or part of the user equipment 20, and/or
the terminal equipment entity or functionality 21 comprises an application or an application program.

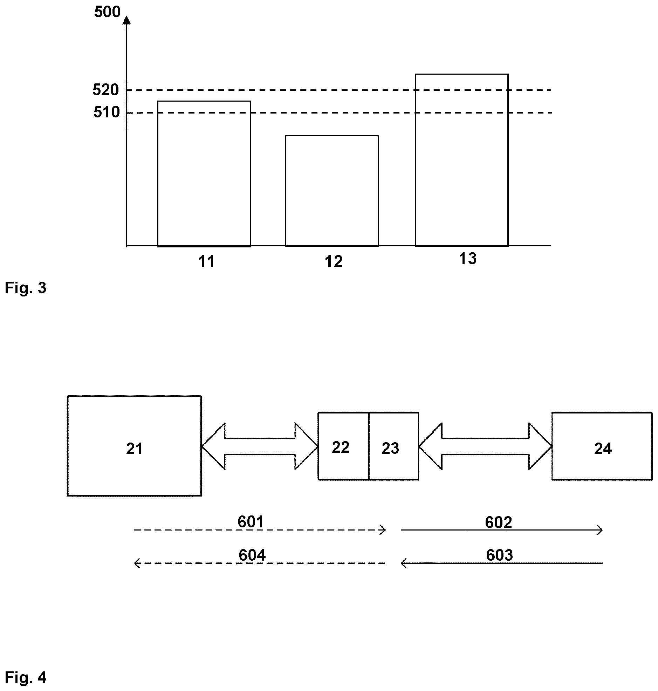

According to the present invention, a HPLMN-provided enhanced selection criterion is able to be applied by the user equipment 20 regarding cell selection and/or regarding network selection. The HPLMN-provided cell selection criterion, designated by reference sign 520, is schematically shown in Figure 3 which represents a situation of the user equipment 20 measuring different signal strength of the different radio cells 11, 12, 13.

The ordinate of the diagram shown in Figure 3 corresponds to the signal strength 500 or an indicator thereof (such as a field strength value and/or signal quality parameter). According to mechanisms in conventionally known mobile communication networks, the user equipment 20 applies a conventionally defined cell selection criterion 510 in the cell selection stage. According to this (conventionally defined) cell selection criterion 510, both the first radio cell 11 and the third radio cell 13 would be regarded as suitable radio cells (according to or applying the cell selection criterion 510 in the cell selection stage and/or in the network selection stage) as both radio cells 11, 13 are schematically shown as having or providing (at the location of the user equipment 20) a signal strength corresponding to or exceeding the (conventionally defined) cell selection criterion 510. According to the present invention, the HPLMN-provided enhanced selection criterion 520 is defined (i.e. somehow received, by the user equipment 20, from the HPLMN, either initially, e.g. stored on an universal integrated circuit card, or during operation of the user equipment 20) and taken into consideration when it comes to select a radio cell and/or a network. As the HPLMN-provided enhanced selection criterion 520 is typically more demanding or requires an increased reception signal level or quality (schematically indicated, in Figure 3, by means of the HPLMN-provided enhanced selection criterion 520 being represented above the conventionally defined cell selection criterion 510, i.e. the HPLMN-provided enhanced selection criterion 520 is especially more restrictive compared to the conventionally defined cell selection criterion 510), only the third radio cell 13 is considered (as it is the only one of the three radio cells represented that the corresponding reception conditions, as measured by the user equipment 20, correspond to or exceed the HPLMN-provided enhanced selection criterion 520 regarding the considered radio access technology), by the user equipment 20, to be or correspond to a suitable radio cell and/or a suitable network in case that the HPLMN-provided enhanced selection criterion 520 is applied, i.e. required.

The HPLMN-provided enhanced selection criterion 520 might either correspond to a HPLMN-provided cell selection criterion being taken into consideration when it comes to select a radio cell. Alternatively or cumulatively, the HPLMN-provided enhanced selection criterion 520 might correspond to an enhanced network selection criterion taken into consideration when it comes to select a network, especially a public land mobile network, especially in the first or initial part of the network selection stage.

Both in Figure 1 and in Figure 3, only radio cells and mobile communication networks 100, 200, 300 are shown without differentiating between different radio access technologies. However, it is to be understood that this also applies for different radio access technologies, e.g. the third radio cell 13 might exceed the HPLMN-provided enhanced selection criterion 520 only regarding one specific radio access technology, but a radio cell (not specifically represented in Figures 1 or 3) of another radio access technology and also provided or generated by the third base station entity 113 might not exceed the respective HPLMN-provided enhanced selection criterion 520 to be applied regarding the other radio access technology, and, perhaps, vice versa for the other radio cells 11, 12.

According to the present invention, the user equipment 20 typically has or is associated with a home public land mobile network, HPLMN, and wherein the enhanced selection criterion 520 comprises or takes into account a home-operator-controlled value being set or being able to be adjusted by the HPLMN or its operator, wherein the HPLMN-provided enhanced selection criterion 520 is especially more restrictive compared to a cell selection criterion 510 (or general cell selection criterion) lacking a home-operator-controlled component, wherein especially the HPLMN-provided enhanced selection criterion 520 is also applied during the normal cell-selection and/or during the network selection procedure.

Figure 4 schematically represents an example of a communication within the user equipment 20 in case of using a universal integrated circuit card 24 as part of the user equipment 20; i.e. Figure 4 shows the communication between the terminal equipment entity or functionality 21, the terminal adaptor entity or functionality 22, the mobile termination entity or functionality 23, and the universal integrated circuit card 24. A double arrow between the terminal equipment entity or functionality 21 and the terminal adaptor entity or functionality 22 schematically and exemplarily indicates the AT-command interface, and another double arrow between the mobile termination entity or functionality 23 and the universal integrated circuit card 24 schematically and exemplarily indicates the mobile termination entity or functionality - universal integrated circuit card interface.

In order to allow an application (i.e. the terminal equipment entity or functionality 21) to query the offsets or thresholds (of the enhanced selection criterion 520) being stored and remotely maintained by the home operator on the subscriber identity module or sim card (or universal integrated circuit card), a respective command set for the "AT(-command) interface" as well as for the "MT-UICC" interface and respective procedures need to be defined. A message flow between the application (or the user) 211, the terminal equipment entity or functionality 21, the terminal adaptor entity or functionality 22, the mobile termination entity or functionality 23 and the universal integrated circuit card 24 could, e.g., result in the following processing steps:
In a first processing step, the user/application 211 triggers a query (towards the terminal equipment entity or functionality 21) in order to obtain the current enhanced selection criterion 520 status/value (done via interaction with a terminal equipment based on API/software library).

In a second processing step (601), the terminal equipment entity or functionality 21, issues (towards the terminal adaptor entity or functionality 22) the AT-Command (set) over the AT command line interface (serial interface), e.g. <AT+CURT> ("AT" as the typical start of an AT-command sequence; "C" as typically for an interaction with 'cellular'; "URT" corresponding to the actual command, e.g. for "User Related Threshold"); the second processing step corresponds to the first step according to the inventive method, i.e. the terminal equipment entity or functionality 21 requesting the selection parameter information 521.

In a third processing step, the terminal adaptor entity or functionality 22 forwards the request to the mobile termination entity or functionality 23.

In a fourth processing step (602), the mobile termination entity or functionality 23 queries the universal integrated circuit card 24.

In a fifth processing step (603), the universal integrated circuit card 24 responds with the current threshold, i.e. provides the selection parameter information 521 to the mobile termination entity or functionality 23.

In a sixth processing step, the mobile termination entity or functionality 23 forwards the result, i.e. the selection parameter information 521, to the terminal adaptor entity or functionality 22.

In a seventh processing step (604), the terminal adaptor entity or functionality 22 forwards the result, i.e. the selection parameter information 521, to the terminal equipment entity or functionality 21 in form of an AT-command result, e.g. like: <CR><LF>+CURT:(0-20,12) <CR><LF> (Where +CURT points at the result to a query of CURT value; (0-20,12) corresponds to a value range of 0-20 and a current value of 12).

In an eighth processing step, the terminal equipment entity or functionality 21 forwards the result to the application 211 (or to the user).

## Claims

1. Method for operating a user equipment (20) in a radio environment comprising a plurality of radio cells (11, 12, 13) of a plurality of mobile communication networks (100, 200, 300), each one of these radio cells (11, 12, 13) being associated, respectively, to at least one mobile communication network of the plurality of mobile communication networks (100, 200, 300), wherein the user equipment (20) measures reception conditions regarding the plurality of radio cells (11, 12, 13), and subsequently selects or registers to a mobile communication network out of the plurality of mobile communication networks (100, 200, 300), wherein the user equipment (20) is associated with a home public land mobile network, HPLMN, and the user equipment (20) comprises a terminal equipment entity or functionality (21) as well as a mobile termination entity or functionality (23), wherein an AT-command interface is used between, on the one hand, the terminal equipment entity or functionality (21), and, on the other hand, the mobile termination entity or functionality (23), wherein, regarding cell selection and/or network selection by the user equipment (20), an enhanced selection criterion (520), provided by the HPLMN, is stored in the user equipment (20),
-- wherein, regarding cell selection by the user equipment (20), a radio cell of a considered radio access technology is considered to be a suitable radio cell only in case that the corresponding reception conditions, as measured by the user equipment (20), correspond to or exceed the HPLMN-provided enhanced selection criterion (520) regarding the considered radio access technology, and/or
-- wherein, regarding network selection by the user equipment (20), only such mobile communication networks corresponding to suitable radio cells of the considered radio access technology are considered for network selection of the user equipment (20) that have or correspond to reception conditions corresponding to or exceeding the enhanced selection criterion,
wherein the method is **characterized by** comprising the following steps:
-- in a first step, the terminal equipment entity or functionality (21) requests a selection parameter information (521) via the AT-command interface, the selection parameter information (521) relating to whether the HPLMN-provided enhanced selection criterion (520) is used by the mobile termination entity or functionality (23) and/or relating to a parameter value of the HPLMN-provided enhanced selection criterion (520),
-- in a second step, the terminal equipment entity or functionality (21) receives the selection parameter information (521) via the AT-command interface.

2. Method according to claim 1, wherein the user equipment (20) comprises, besides the terminal equipment entity or functionality (21) and the mobile termination entity or functionality (23), a terminal adaptor entity or functionality (22), wherein the terminal adaptor entity or functionality (22) receives, during or after the first step, the request (522) of the selection parameter information (521) from the terminal equipment entity or functionality (21), and wherein the terminal adaptor entity or functionality (22) transmits, during or prior to the second step, the selection parameter information (521) to the terminal equipment entity or functionality (21),
wherein especially the user equipment (20) is a machine type communication device.

3. Method according to claim 2, wherein the terminal adaptor entity or functionality (22), transmits, during or after the first step, a further request (524) of the selection parameter information (521) to the mobile termination entity or functionality (23), and wherein the terminal adaptor entity or functionality (22) receives, during or prior to the second step, the selection parameter information (521) from the mobile termination entity or functionality (23).

4. Method according to one of the preceding claims, wherein the user equipment (20) comprises a universal integrated circuit card, especially comprising a secure element of the user equipment (20).

5. Method according to one of the preceding claims, wherein the AT-command interface
between the terminal equipment entity or functionality (21) and the mobile termination entity or functionality (23)
is used by an application or application program of the terminal equipment entity or functionality (21) in order to execute settings of the application or in order to execute a command of the HPLMN or of a backend application server,
wherein especially the application or application program of the terminal equipment entity or functionality (21) thereafter reports the result to the HPLMN or to the backend application server, especially via application layer and/or non-access stratum communication, NAS.

6. Method according to one of the preceding claims, wherein the HPLMN-provided enhanced selection criterion (520) takes into account a home-operator-controlled value being set or being able to be adjusted by the HPLMN or its operator, wherein the HPLMN-provided enhanced selection criterion (520) is especially more restrictive compared to a cell selection criterion (510) lacking a home-operator-controlled component.

7. Method according to claim 6, wherein the home-operator-controlled value of the HPLMN-provided enhanced selection criterion (520) corresponds to at least one out of the following:
-- an absolute value or,
-- a relative value compared to the cell selection criterion (510) lacking a home-operator-controlled component,
-- an offset value being additionally applied compared to the cell selection criterion (510) lacking a home-operator-controlled component

8. Method according to claim 6 or 7, wherein the home-operator-controlled value of the HPLMN-provided enhanced selection criterion (520) is
-- stored in the user equipment (20), especially within or as part of the universal integrated circuit card, or
-- provided or transmitted to the user equipment (20), especially by means of using an over-the-air transmission method, or
-- provided or transmitted via non-access stratum, NAS, signaling to the user equipment (20) by the HPLMN.

9. User equipment (20) for being operated in a radio environment comprising a plurality of radio cells (11, 12, 13) of a plurality of mobile communication networks (100, 200, 300), each one of these radio cells (11, 12, 13) being associated, respectively, to at least one mobile communication network of the plurality of mobile communication networks (100, 200, 300),
wherein the user equipment (20) is configured to measure reception conditions regarding the plurality of radio cells (11, 12, 13), and is configured to subsequently select or register to a mobile communication network out of the plurality of mobile communication networks (100, 200, 300), wherein the user equipment (20) is associated with a home public land mobile network, HPLMN, and the user equipment (20) comprises a terminal equipment entity or functionality (21) as well as a mobile termination entity or functionality (23), wherein the user equipment (20) is configured to use an AT-command interface between, on the one hand, the terminal equipment entity or functionality (21), and, on the other hand, the mobile termination entity or functionality (23), wherein, regarding cell selection and/or network selection by the user equipment (20), a enhanced selection criterion (520), provided by the HPLMN, is stored in the user equipment (20),
-- wherein, regarding cell selection by the user equipment (20), a radio cell of a considered radio access technology is considered to be a suitable radio cell only in case that the corresponding reception conditions, as measured by the user equipment (20), correspond to or exceed the HPLMN-provided enhanced selection criterion (520) regarding the considered radio access technology, and/or
-- wherein, regarding network selection by the user equipment (20), only such mobile communication networks corresponding to suitable radio cells of the considered radio access technology are considered for network selection of the user equipment (20) that have or correspond to reception conditions corresponding to or exceeding the enhanced selection criterion,
wherein the user equipment (20) is **characterized by** being configured such that:
-- the terminal equipment entity or functionality (21) requests a selection parameter information (521) via the AT-command interface, the selection parameter information (521) relating to whether the HPLMN-provided enhanced selection criterion (520) is used by the mobile termination entity or functionality (23) and/or relating to a parameter value of the HPLMN-provided enhanced selection criterion (520), and
-- the terminal equipment entity or functionality (21) receives the selection parameter information (521) via the AT-command interface,
wherein especially the user equipment (20) is a machine type communication device.

10. System for operating a user equipment (20) in a radio environment comprising a plurality of radio cells (11, 12, 13) of a plurality of mobile communication networks (100, 200, 300), each one of these radio cells (11, 12, 13) being associated, respectively, to at least one mobile communication network of the plurality of mobile communication networks (100, 200, 300), wherein the system comprises the user equipment (20) and the plurality of mobile communication networks (100, 200, 300), the user equipment (20) being configured to measure reception conditions regarding the plurality of radio cells (11, 12, 13), and being configured to subsequently select or register to a mobile communication network out of the plurality of mobile communication networks (100, 200, 300), wherein a home public land mobile network, HPLMN, is associated with the user equipment (20), and the user equipment (20) comprising a terminal equipment entity or functionality (21) as well as a mobile termination entity or functionality (23), wherein the user equipment (20) is configured to use an AT-command interface between, on the one hand, the terminal equipment entity or functionality (21), and, on the other hand, the mobile termination entity or functionality (23), wherein, regarding cell selection and/or network selection by the user equipment (20), an enhanced selection criterion (520), provided by the HPLMN, is stored in the user equipment (20),
-- wherein, regarding cell selection by the user equipment (20), a radio cell of a considered radio access technology is considered to be a suitable radio cell only in case that the corresponding reception conditions, as measured by the user equipment (20), correspond to or exceed the HPLMN-provided enhanced selection criterion (520) regarding the considered radio access technology, and/or
-- wherein, regarding network selection by the user equipment (20), only such mobile communication networks corresponding to suitable radio cells of the considered radio access technology are considered for network selection of the user equipment (20) that have or correspond to reception conditions corresponding to or exceeding the enhanced selection criterion,
wherein the system is **characterized by** being configured such that:
-- the terminal equipment entity or functionality (21) requests a selection parameter information (521) via the AT-command interface, the selection parameter information (521) relating to whether the HPLMN-provided enhanced selection criterion (520) is used by the mobile termination entity or functionality (23) and/or relating to a parameter value of the HPLMN-provided enhanced selection criterion (520), and
-- the terminal equipment entity or functionality (21) receives the selection parameter information (521) via the AT-command interface.

11. Program comprising a computer readable program code, which, when executed on a computer associated with a user equipment (20) or on a user equipment (20), causes the computer or the user equipment (20) to perform a method according one of claims 1 to 8.

12. Computer-readable medium comprising instructions which when executed on a computer associated with a user equipment (20) or on a user equipment (20), causes the computer or the user equipment (20) to perform a method according one of claims 1 to 8.

## Patentansprüche

1. Verfahren zum Betreiben einer Benutzerausrüstung (20) in einer Funkumgebung, umfassend mehrere Funkzellen (11, 12, 13) mehrerer Mobilkommunikationsnetze (100, 200, 300), wobei jede dieser Funkzellen (11, 12, 13) jeweils mit mindestens einem Mobilkommunikationsnetz der mehreren Mobilkommunikationsnetze (100, 200, 300) verknüpft ist, wobei die Benutzerausrüstung (20) Empfangsbedingungen bezüglich der mehreren Funkzellen (11, 12, 13) misst und anschließend ein Mobilkommunikationsnetz aus den mehreren Mobilkommunikationsnetzen (100, 200, 300) auswählt oder sich in ihm registriert, wobei die Benutzerausrüstung (20) mit einem terrestrischen öffentlichen Heimat-Mobilfunknetz (Home Public Land Mobile Network, HPLMN) verknüpft ist, und die Benutzerausrüstung (20) eine Endgerätentität oder -funktionalität (21) sowie eine Mobilterminierungsentität oder -funktionalität (23) umfasst, wobei zwischen der Endgerätentität oder -funktionalität (21) einerseits und der Mobilterminierungsentität oder -funktionalität (23) andererseits eine AT-Befehlsschnittstelle verwendet wird, wobei bezüglich der Zellenauswahl und/oder Netzauswahl durch die Benutzerausrüstung (20) ein durch das HPLMN bereitgestelltes erweitertes Auswahlkriterium (520) in der Benutzerausrüstung (20) gespeichert wird,
- wobei, bezüglich der Zellenauswahl durch die Benutzerausrüstung (20), eine Funkzelle einer in Betracht gezogenen Funkzugangstechnologie nur dann als eine geeignete Funkzelle angesehen wird, wenn die entsprechenden Empfangsbedingungen, gemäß Messung durch die Benutzerausrüstung (20), dem durch das HPLMN bereitgestellten erweiterten Zellenauswahlkriterium (520) bezüglich der in Betracht gezogenen Funkzugangstechnologie entsprechen oder es übertreffen, und/oder
- wobei, bezüglich der Netzauswahl durch die Benutzerausrüstung (20), nur solche Mobilfunknetze, die geeigneten Funkzellen der in Betracht gezogenen Funkzugangstechnologie entsprechen, für die Netzauswahl der Benutzerausrüstung (20) in Betracht gezogen werden, die Empfangsbedingungen aufweisen oder entsprechen, die dem erweiterten Auswahlkriterium entsprechen oder es übertreffen,
wobei das Verfahren **dadurch gekennzeichnet ist, dass** es die folgenden Schritte umfasst:
- in einem ersten Schritt fordert die Endgerätentität oder -funktionalität (21) eine Auswahlparameterinformation (521) über die AT-Befehlsschnittstelle an, wobei sich die Auswahlparameterinformation (521) darauf bezieht, ob das durch das HPLMN bereitgestellte erweiterte Auswahlkriterium (520) durch die Mobilterminierungsentität oder -funktionalität (23) verwendet wird und/oder sich auf einen Parameterwert des durch das HPLMN bereitgestellten erweiterten Auswahlkriteriums (520) bezieht,
- in einem zweiten Schritt empfängt die Endgerätentität oder -funktionalität (21) die Auswahlparameterinformation (521) über die AT-Befehlsschnittstelle.

2. Verfahren nach Anspruch 1, wobei die Benutzerausrüstung (20) neben der Endgerätentität oder -funktionalität (21) und der Mobilterminierungsentität oder -funktionalität (23) eine Endgerätadapterentität oder -funktionalität (22) umfasst, wobei die Endgerätadapterentität oder -funktionalität (22) während oder nach dem ersten Schritt die Anforderung (522) der Auswahlparameterinformation (521) von der Endgerätentität oder -funktionalität (21) empfängt, und wobei die Endgerätanpassungsentität oder -funktionalität (22) während oder vor dem zweiten Schritt die Auswahlparameterinformation (521) an die Endgerätentität oder -funktionalität (21) sendet,
wobei insbesondere die Benutzerausrüstung (20) eine Kommunikationsvorrichtung vom Maschinentyp ist.

3. Verfahren nach Anspruch 2, wobei die Endgerätanpassungsentität oder -funktionalität (22) während oder nach dem ersten Schritt eine weitere Anforderung (524) der Auswahlparameterinformation (521) an die Mobilterminierungsentität oder -funktionalität (23) sendet, und wobei die Endgerätanpassungsentität oder -funktionalität (22) während oder vor dem zweiten Schritt die Auswahlparameterinformation (521) von der Mobilterminierungsentität oder -funktionalität (23) empfängt.

4. Verfahren nach einem der vorangehenden Ansprüche, wobei die Benutzerausrüstung (20) eine universelle integrierte Schaltkreisplatine umfasst und insbesondere ein sicheres Element der Benutzerausrüstung (20) umfasst.

5. Verfahren nach einem der vorangehenden Ansprüche, wobei die AT-Befehlsschnittstelle zwischen der Endgerätentität oder -funktionalität (21) und der Mobilterminierungsentität oder -funktionalität (23) durch eine Anwendung oder ein Anwendungsprogramm der Endgerätentität oder -funktionalität (21) verwendet wird, um Einstellungen der Anwendung auszuführen oder um einen Befehl des HPLMN oder eines Backend-Anwendungsservers auszuführen,
wobei insbesondere die Anwendung oder das Anwendungsprogramm der Endgerätentität oder -funktionalität (21) danach das Ergebnis an das HPLMN oder den Backend-Anwendungsserver, insbesondere über Anwendungsschicht- und/oder Nichtzugangsschicht (Non-Access Stratum, NAS)-Kommunikation, meldet.

6. Verfahren nach einem der vorangehenden Ansprüche, wobei das durch das HPLMN bereitgestellte erweiterte Auswahlkriterium (520) einen durch einen Heimnetzbetreiber gesteuerten Wert berücksichtigt, der durch das HPLMN oder seinen Betreiber eingestellt wird oder justiert werden kann, wobei das durch das HPLMN bereitgestellte erweiterte Auswahlkriterium (520) insbesondere restriktiver ist als ein Zellenauswahlkriterium (510), dem eine durch einen Heimnetzbetreiber gesteuerte Komponente fehlt.

7. Verfahren nach Anspruch 6, wobei der durch einen Heimnetzbetreiber gesteuerte Wert des durch das HPLMN bereitgestellten erweiterten Auswahlkriteriums (520) mindestens einem von Folgendem entspricht:
- einem absoluten Wert,
- einem relativen Wert im Vergleich zu dem Zellenauswahlkriterium (510), dem eine durch einen Heimnetzbetreiber gesteuerte Komponente fehlt, und
- einem Versatzwert, der im Vergleich zu dem Zellenauswahlkriterium (510), dem eine durch einen Heimnetzbetreiber gesteuerte Komponente fehlt, zusätzlich angewendet wird.

8. Verfahren nach Anspruch 6 oder 7, wobei der durch den Heimnetzbetreiber gesteuerte Wert des durch das HPLMN bereitgestellten erweiterten Auswahlkriteriums (520)
- in der Benutzerausrüstung (20), insbesondere innerhalb der, oder als Teil der, universellen integrierten Schaltkreisplatine gespeichert wird, oder
- insbesondere mittels eines drahtlosen Übertragungsverfahrens für die Benutzerausrüstung (20) bereitgestellt oder an sie gesendet wird, oder
- durch das HPLMN über Nichtzugangsschicht (NAS)-Signalisierung für die Benutzerausrüstung (20) bereitgestellt oder an sie gesendet wird.

9. Benutzerausrüstung (20) für den Betrieb in einer Funkumgebung, umfassend mehrere Funkzellen (11, 12, 13) mehrerer Mobilkommunikationsnetze (100, 200, 300), wobei jede dieser Funkzellen (11, 12, 13) jeweils mit mindestens einem Mobilkommunikationsnetz der mehreren Mobilkommunikationsnetze (100, 200, 300) verknüpft ist, wobei die Benutzerausrüstung (20) dafür eingerichtet ist, Empfangsbedingungen bezüglich der mehreren Funkzellen (11, 12, 13) zu messen, und dafür eingerichtet ist, anschließend ein Mobilkommunikationsnetz aus den mehreren Mobilkommunikationsnetzen (100, 200, 300) auszuwählen oder sich bei diesem zu registrieren, wobei die Benutzerausrüstung (20) mit einem terrestrischen öffentlichen Heimat-Mobilfunknetz (Home Public Land Mobile Network, HPLMN) verknüpft ist und die Benutzerausrüstung (20) eine Endgerätentität oder -funktionalität (21) sowie eine Mobilterminierungsentität oder -funktionalität (23) umfasst, wobei die Benutzerausrüstung (20) dafür eingerichtet ist, eine AT-Befehlsschnittstelle zwischen der Endgerätentität oder -funktionalität (21) einerseits und der Mobilterminierungsentität oder -funktionalität (23) andererseits zu verwenden, wobei bezüglich der Zellenauswahl und/oder Netzauswahl durch die Benutzerausrüstung (20) ein durch das HPLMN bereitgestelltes erweitertes Auswahlkriterium (520) in der Benutzerausrüstung (20) gespeichert wird,
- wobei, bezüglich der Zellenauswahl durch die Benutzerausrüstung (20), eine Funkzelle einer in Betracht gezogenen Funkzugangstechnologie nur dann als eine geeignete Funkzelle angesehen wird, wenn die entsprechenden Empfangsbedingungen, gemäß Messung durch die Benutzerausrüstung (20), dem durch das HPLMN bereitgestellten erweiterten Zellenauswahlkriterium (520) bezüglich der in Betracht gezogenen Funkzugangstechnologie entsprechen oder es übertreffen, und/oder
- wobei, bezüglich der Netzauswahl durch die Benutzerausrüstung (20), nur solche Mobilfunknetze, die geeigneten Funkzellen der in Betracht gezogenen Funkzugangstechnologie entsprechen, für die Netzauswahl der Benutzerausrüstung (20) in Betracht gezogen werden, die Empfangsbedingungen aufweisen oder entsprechen, die dem erweiterten Auswahlkriterium entsprechen oder es übertreffen,
wobei die Benutzerausrüstung (20) **dadurch gekennzeichnet ist, dass** sie so eingerichtet ist, dass:
- die Endgerätentität oder -funktionalität (21) eine Auswahlparameterinformation (521) über die AT-Befehlsschnittstelle anfordert, wobei sich die Auswahlparameterinformation (521) darauf bezieht, ob das durch das HPLMN bereitgestellte erweiterte Auswahlkriterium (520) durch die Mobilterminierungsentität oder -funktionalität (23) verwendet wird und/oder sich auf einen Parameterwert des durch das HPLMN bereitgestellten erweiterten Auswahlkriteriums (520) bezieht, und
- die Endgerätentität oder -funktionalität (21) die Auswahlparameterinformation (521) über die AT-Befehlsschnittstelle empfängt, wobei insbesondere die Benutzerausrüstung (20) eine Kommunikationsvorrichtung vom Maschinentyp ist.

10. System zum Betreiben einer Benutzerausrüstung (20) in einer Funkumgebung, umfassend mehrere Funkzellen (11, 12, 13) mehrerer Mobilkommunikationsnetze (100, 200, 300), wobei jede dieser Funkzellen (11, 12, 13) jeweils mit mindestens einem Mobilkommunikationsnetz der mehreren Mobilkommunikationsnetze (100, 200, 300) verknüpft ist, wobei das System die Benutzerausrüstung (20) und die mehreren Mobilkommunikationsnetze (100, 200, 300) umfasst, wobei die Benutzerausrüstung (20) dafür eingerichtet ist, Empfangsbedingungen bezüglich die mehreren Funkzellen (11, 12, 13) zu messen, und dafür eingerichtet ist, anschließend ein Mobilkommunikationsnetz aus den mehreren Mobilkommunikationsnetzen (100, 200, 300) auszuwählen oder sich in ihm zu registrieren, wobei ein terrestrisches öffentliches Heimat-Mobilfunknetz (Home Public Land Mobile Network, HPLMN) mit der Benutzerausrüstung (20) verknüpft ist, und die Benutzerausrüstung (20) eine Endgerätentität oder -funktionalität (21) sowie eine Mobilterminierungsentität oder -funktionalität (23) umfasst, wobei die Benutzerausrüstung (20) dafür eingerichtet ist, eine AT-Befehlsschnittstelle zwischen der Endgerätentität oder -funktionalität (21) einerseits und der Mobilterminierungsentität oder -funktionalität (23) andererseits zu verwenden, wobei bezüglich der Zellenauswahl und/oder Netzauswahl durch die Benutzereinrichtung (20) ein durch das HPLMN bereitgestelltes erweitertes Auswahlkriterium (520) in der Benutzereinrichtung (20) gespeichert wird,
- wobei, bezüglich der Zellenauswahl durch die Benutzerausrüstung (20), eine Funkzelle einer in Betracht gezogenen Funkzugangstechnologie nur dann als eine geeignete Funkzelle angesehen wird, wenn die entsprechenden Empfangsbedingungen, gemäß Messung durch die Benutzerausrüstung (20), dem durch das HPLMN bereitgestellten erweiterten Zellenauswahlkriterium (520) bezüglich der in Betracht gezogenen Funkzugangstechnologie entsprechen oder es übertreffen, und/oder
- wobei, bezüglich der Netzauswahl durch die Benutzerausrüstung (20), nur solche Mobilfunknetze, die geeigneten Funkzellen der in Betracht gezogenen Funkzugangstechnologie entsprechen, für die Netzauswahl der Benutzerausrüstung (20) in Betracht gezogen werden, die Empfangsbedingungen aufweisen oder entsprechen, die dem erweiterten Auswahlkriterium entsprechen oder es übertreffen,
wobei das System **dadurch gekennzeichnet ist, dass** es so eingerichtet ist, dass:
- die Endgerätentität oder -funktionalität (21) eine Auswahlparameterinformation (521) über die AT-Befehlsschnittstelle anfordert, wobei sich die Auswahlparameterinformation (521) darauf bezieht, ob das durch das HPLMN bereitgestellte erweiterte Auswahlkriterium (520) durch die Mobilterminierungsentität oder -funktionalität (23) verwendet wird und/oder sich auf einen Parameterwert des durch das HPLMN bereitgestellten erweiterten Auswahlkriteriums (520) bezieht, und
- die Endgerätentität oder -funktionalität (21) die Auswahlparameterinformation (521) über die AT-Befehlsschnittstelle empfängt.

11. Programm, umfassend einen computerlesbaren Programmcode, der, wenn er auf einem mit einer Benutzerausrüstung (20) verknüpften Computer oder in einer Benutzerausrüstung (20) ausgeführt wird, den Computer oder die Benutzerausrüstung (20) veranlasst, ein Verfahren nach einem der Ansprüche 1 bis 8 durchzuführen.

12. Computerlesbares Medium, umfassend Instruktionen, die, wenn sie auf einem mit einer Benutzerausrüstung (20) verknüpften Computer oder in einer Benutzerausrüstung (20) ausgeführt werden, den Computer oder die Benutzerausrüstung (20) veranlassen, ein Verfahren nach einem der Ansprüche 1 bis 8 durchzuführen.

## Revendications

1. Procédé pour faire fonctionner un équipement d'utilisateur (20) dans un environnement radio comprenant une pluralité de cellules radio (11, 12, 13) d'une pluralité de réseaux de communication mobile (100, 200, 300), chacune de ces cellules radio (11, 12, 13) étant associée, respectivement, à au moins un réseau de communication mobile de la pluralité de réseaux de communication mobile (100, 200, 300), dans lequel l'équipement d'utilisateur (20) mesure des conditions de réception concernant la pluralité de cellules radio (11, 12, 13), et sélectionne ou s'enregistre ensuite dans un réseau de communication mobile parmi la pluralité de réseaux de communication mobile (100, 200, 300), dans lequel l'équipement d'utilisateur (20) est associé à un réseau mobile terrestre public de rattachement (Home Public Land Mobile Network, HPLMN) et l'équipement d'utilisateur (20) comprend une entité ou une fonctionnalité d'équipement terminal (21) ainsi qu'une entité ou une fonctionnalité de terminaison mobile (23), dans lequel une interface de commande AT est utilisée entre, d'une part, l'entité ou la fonctionnalité d'équipement terminal (21) et, d'autre part, l'entité ou la fonctionnalité de terminaison mobile (23), dans lequel, en ce qui concerne une sélection de cellule et/ou une sélection de réseau par l'équipement d'utilisateur (20), un critère de sélection amélioré (520), fourni par le HPLMN, est stocké dans l'équipement d'utilisateur (20),
- dans lequel, en ce qui concerne la sélection de cellule par l'équipement d'utilisateur (20), une cellule radio d'une technologie d'accès radio considérée est considérée comme étant une cellule radio adaptée uniquement dans un cas où les conditions de réception correspondantes, lorsqu'elles sont mesurées par l'équipement d'utilisateur (20), correspondent au critère de sélection amélioré (520) fourni par le HPLMN concernant la technologie d'accès radio considérée ou dépassent celui-ci, et/ou
- dans lequel, en ce qui concerne la sélection de réseau par l'équipement d'utilisateur (20), seuls des réseaux de communication mobile correspondant à des cellules radio adaptées de la technologie d'accès radio considérée sont considérés pour la sélection de réseau de l'équipement d'utilisateur (20) de telle sorte qu'ils ont ou qu'ils correspondent à des conditions de réception correspondant au critère de sélection amélioré ou dépassant celui-ci,
dans lequel le procédé est **caractérisé en ce qu'**il comprend les étapes suivantes :
- dans une première étape, l'entité ou la fonctionnalité d'équipement terminal (21) demande une information de paramètre de sélection (521) via l'interface de commande AT, l'information de paramètre de sélection (521) concernant si le critère de sélection amélioré (520) fourni par le HPLMN est utilisée par l'entité ou la fonctionnalité de terminaison mobile (23) et/ou concernant une valeur de paramètres du critère de sélection amélioré (520) fourni par le HPLMN,
- dans une seconde étape, l'entité ou la fonctionnalité d'équipement terminal (21) reçoit l'information de paramètre de sélection (521) via l'interface de commande AT.

2. Procédé selon la revendication 1, dans lequel l'équipement d'utilisateur (20) comprend, en plus de l'entité ou de la fonctionnalité d'équipement terminal (21) et de l'entité ou de la fonctionnalité de terminaison mobile (23), une entité ou une fonctionnalité d'adaptateur de terminal (22), dans lequel l'entité ou la fonctionnalité d'adaptateur de terminal (22) reçoit, pendant ou après la première étape, la demande (522) de l'information de paramètre de sélection (521) provenant de l'entité ou de la fonctionnalité d'équipement terminal (21), et dans lequel l'entité ou la fonctionnalité d'adaptateur de terminal (22) transmet, pendant ou avant la seconde étape, l'information de paramètre de sélection (521) à l'entité ou à la fonctionnalité d'équipement terminal (21),
dans lequel l'équipement d'utilisateur (20) est en particulier un dispositif de communication de type machine.

3. Procédé selon la revendication 2, dans lequel l'entité ou la fonctionnalité d'adaptateur de terminal (22) transmet, pendant ou après la première étape, une demande supplémentaire (524) de l'information de paramètre de sélection (521) à l'entité ou à la fonctionnalité de terminaison mobile (23), et dans lequel l'entité ou la fonctionnalité d'adaptateur terminal (22) reçoit, pendant ou avant la seconde étape, l'information de paramètre de sélection (521) provenant de l'entité ou la fonctionnalité d'adaptateur de terminaison mobile (23).

4. Procédé selon l'une des revendications précédentes, dans lequel l'équipement d'utilisateur (20) comprend une carte à circuit intégré universelle, comprenant en particulier un élément sécurisé de l'équipement d'utilisateur (20).

5. Procédé selon l'une des revendications précédentes, dans lequel l'interface de commande AT entre l'entité ou la fonctionnalité d'équipement terminal (21) et l'entité ou la fonctionnalité de terminaison mobile (23) est utilisée par une application ou un programme d'application de l'entité ou de la fonctionnalité d'équipement terminal (21) afin d'exécuter des paramétrages de l'application ou afin d'exécuter une commande du HPLMN ou d'un serveur d'applications dorsales,
dans lequel en particulier l'application ou le programme d'application de l'entité ou de la fonctionnalité d'équipement terminal (21) rapporte ensuite le résultat au HPLMN ou au serveur d'applications dorsales, en particulier via une couche application et/ou une communication par strate de non-accès, NAS.

6. Procédé selon l'une des revendications précédentes, dans lequel le critère de sélection amélioré (520) fourni par le HPLMN prend en compte une valeur contrôlée par un opérateur de rattachement étant fixée ou pouvant être réglée par le HPLMN ou son opérateur, dans lequel le critère de sélection amélioré (520) fourni par le HPLMN est en particulier plus restrictif comparé à un critère de sélection de cellule (510) dépourvu d'un composant contrôlé par un opérateur de rattachement.

7. Procédé selon la revendication 6, dans lequel la valeur contrôlée par un opérateur de rattachement du critère de sélection amélioré (520) fourni par le HPLMN correspond à au moins un des éléments suivants :
- une valeur absolue ou,
- une valeur relative comparée au critère de sélection de cellule (510) dépourvu d'un composant contrôlé par un opérateur de rattachement,
- une valeur de décalage étant appliquée en plus comparée au critère de sélection de cellule (510) dépourvu d'un composant contrôlé par un opérateur de rattachement.

8. Procédé selon la revendication 6 ou 7, dans lequel la valeur contrôlée par un opérateur de rattachement du critère de sélection amélioré (520) fourni par le HPLMN est
- stockée dans l'équipement d'utilisateur (20), en particulier à l'intérieur ou en tant que partie de la carte à circuit intégré universelle, ou
- fournie ou transmise à l'équipement d'utilisateur (20), en particulier par l'utilisation d'un procédé de transmission hertzienne, ou
- fournie ou transmise via une signalisation de strate de non-accès, NAS, à l'équipement d'utilisateur (20) par le HPLMN.

9. Équipement d'utilisateur (20) destiné à fonctionner dans un environnement radio comprenant une pluralité de cellules radio (11, 12, 13) d'une pluralité de réseaux de communication mobile (100, 200, 300), chacune de ces cellules radio (11, 12, 13) étant associée, respectivement, à au moins un réseau de communication mobile de la pluralité de réseaux de communication mobile (100, 200, 300),
dans lequel l'équipement d'utilisateur (20) est configuré pour mesurer des conditions de réception concernant la pluralité de cellules radio (11, 12, 13), et est configuré pour sélectionner ou s'enregistrer ensuite dans un réseau de communication mobile parmi la pluralité de réseaux de communication mobile (100, 200, 300), dans lequel l'équipement d'utilisateur (20) est associé à un réseau mobile terrestre public de rattachement (Home Public Land Mobile Network, HPLMN) et l'équipement d'utilisateur (20) comprend une entité ou une fonctionnalité d'équipement terminal (21) ainsi qu'une entité ou une fonctionnalité de terminaison mobile (23), dans lequel l'équipement d'utilisateur (20) est configuré pour utiliser une interface de commande AT entre, d'une part, l'entité ou la fonctionnalité d'équipement terminal (21) et, d'autre part, l'entité ou la fonctionnalité de terminaison mobile (23), dans lequel, en ce qui concerne une sélection de cellule et/ou une sélection de réseau par l'équipement d'utilisateur (20), un critère de sélection amélioré (520), fourni par le HPLMN, est stocké dans l'équipement d'utilisateur (20),
- dans lequel, en ce qui concerne la sélection de cellule par l'équipement d'utilisateur (20), une cellule radio d'une technologie d'accès radio considérée est considérée comme étant une cellule radio adaptée uniquement dans un cas où les conditions de réception correspondantes, lorsqu'elles sont mesurées par l'équipement d'utilisateur (20), correspondent au critère de sélection amélioré (520) fourni par le HPLMN concernant la technologie d'accès radio considérée ou dépassent celui-ci, et/ou
- dans lequel, en ce qui concerne la sélection de réseau par l'équipement d'utilisateur (20), seuls des réseaux de communication mobile correspondant à des cellules radio adaptées de la technologie d'accès radio considérée sont considérés pour la sélection de réseau de l'équipement d'utilisateur (20) de telle sorte qu'ils ont ou qu'ils correspondent à des conditions de réception correspondant au critère de sélection amélioré ou dépassant celui-ci,
dans lequel l'équipement d'utilisateur (20) est **caractérisé en ce qu'**il est configuré de telle sorte que :
- l'entité ou la fonctionnalité d'équipement terminal (21) demande une information de paramètre de sélection (521) via l'interface de commande AT, l'information de paramètre de sélection (521) déterminant si le critère de sélection amélioré (520) fourni par le HPLMN est utilisée par l'entité ou la fonctionnalité de terminaison mobile (23) et/ou concernant une valeur de paramètre du critère de sélection amélioré (520) fourni par le HPLMN, et
- l'entité ou la fonctionnalité d'équipement terminal (21) reçoit l'information de paramètre de sélection (21) via l'interface de commande AT, dans lequel l'équipement d'utilisateur (20) est en particulier un dispositif de communication de type machine.

10. Système destiné à faire fonctionner un équipement d'utilisateur (20) dans un environnement radio comprenant une pluralité de cellules radio (11, 12, 13) d'une pluralité de réseaux de communication mobile (100, 200, 300), chacune de ces cellules radio (11, 12, 13) étant associée, respectivement, à au moins un réseau de communication mobile de la pluralité de réseaux de communication mobile (100, 200, 30), dans lequel le système comprend l'équipement d'utilisateur (20) et la pluralité de réseaux de communication mobile (100, 200, 300), l'équipement d'utilisateur (20) étant configuré pour mesurer des conditions de réception concernant la pluralité de cellules radio (11, 12, 13), et étant configuré pour sélectionner ou s'enregistrer ensuite dans un réseau de communication mobile parmi la pluralité de réseaux de communication mobile (100, 200, 300), dans lequel un réseau mobile terrestre public de rattachement (Home Public Land Mobile Network, HPLMN) est associé à l'équipement d'utilisateur (20), et l'équipement d'utilisateur (20) comprenant une entité ou une fonctionnalité d'équipement terminal (21) ainsi qu'une entité ou une fonctionnalité de terminaison mobile (23), dans lequel l'équipement d'utilisateur (20) est configuré pour utiliser une interface de commande AT entre, d'une part, l'entité ou la fonctionnalité d'équipement terminal (21) et, d'autre part, l'entité ou la fonctionnalité de terminaison mobile (23), dans lequel, en ce qui concerne une sélection de cellule et/ou une sélection de réseau par l'équipement d'utilisateur (20), un critère de sélection amélioré (520) fourni par le HPLMN est stocké dans l'équipement d'utilisateur (20),
- dans lequel, en ce qui concerne la sélection de cellule par l'équipement d'utilisateur (20), une cellule radio d'une technologie d'accès radio considérée est considérée comme étant une cellule radio adaptée uniquement dans un cas où les conditions de réception correspondantes, lorsqu'elles sont mesurées par l'équipement d'utilisateur (20), correspondent au critère de sélection amélioré (520) fourni par le HPLMN concernant la technologie d'accès radio considérée ou dépassent celui-ci, et/ou
- dans lequel, en ce qui concerne la sélection de réseau par l'équipement d'utilisateur (20), seuls des réseaux de communication mobile correspondant à des cellules radio adaptées de la technologie d'accès radio considérée sont considérés pour la sélection de réseau de l'équipement d'utilisateur (20) de telle sorte qu'ils ont ou qu'ils correspondent à des conditions de réception correspondant au critère de sélection amélioré ou dépassant celui-ci,
dans lequel le système est **caractérisé en ce qu'**il est configuré de telle sorte que :
- l'entité ou la fonctionnalité d'équipement terminal (21) demande une information de paramètre de sélection (521) via l'interface de commande AT, l'information de paramètre de sélection (521) déterminant si le critère de sélection amélioré (520) fourni par le HPLMN est utilisée par l'entité ou la fonctionnalité de terminaison mobile (23) et/ou concernant une valeur de paramètre du critère de sélection amélioré (520) fourni par le HPLMN, et
- l'entité ou la fonctionnalité d'équipement terminal (21) reçoit l'information de paramètre de sélection (521) via l'interface de commande AT.

11. Programme comprenant un code de programme lisible par ordinateur qui, lorsqu'il est exécuté sur un ordinateur associé à l'équipement d'utilisateur (20) ou sur un équipement d'utilisateur (20), amène l'ordinateur ou l'équipement d'utilisateur (20) à mettre en œuvre un procédé selon l'une des revendications 1 à 8.

12. Support lisible par ordinateur comprenant des instructions qui, lorsqu'elles sont exécutées sur un ordinateur associé à un équipement d'utilisateur (20) ou sur un équipement d'utilisateur (20), amène l'ordinateur ou l'équipement d'utilisateur (20) à mettre en œuvre un procédé selon l'une des revendications 1 à 8.
